# EUROPEAN PATENT APPLICATION

(11) **EP 1 617 642 A2**
(43) Date of publication of application: **18.01.2006**
(21) Application number: 05015422.8
(22) Date of filing: 15.07.2005
(51) Int. Cl.: H04M 15/00

(54) **Method and system for controlling usage of communications services**

(30) Priority: 16.07.2004 GB 0416019
(71) Applicant: Orange Personal Communications Services Ltd., Bradley Stoke BS32 4QJ (GB)
(72) Inventor: The designation of the inventor has not yet been filed
(74) Representative: McCann, Heather Alison

(57) **Abstract**

Embodiments of the invention are concerned with a system and method of controlling usage of communications services requested by a subscriber in a communications network, and is particularly suitable for arrangements in which the communications network provides subscribers with access to a plurality of optional usage schemes such as so-called bonus packages, which specify an amount of service (e.g. in terms of number of services and/or duration of services) for which the usage scheme is applicable, together with data specifying the conditions under which the usage scheme is applicable.

In one aspect of the Invention, embodiments provide a method of controlling usage of a communications service requested by a subscriber in a communications network, the communications network providing subscribers with access to a plurality of optional usage schemes and storing data identifying optional usage schemes to which individual subscribers have taken up access, the network storing usage criteria for each of said plurality of optional usage schemes, said usage criteria defining characteristics of a communications service to which a respective usage scheme may be applied, the method comprising:
identifying one or more characteristics of a communications service requested by a subscriber; identifying one or more optional usage schemes to which the subscriber has taken up access; and selecting at least one of said taken-up usage schemes, the selected taken-up usage scheme corresponding to the identified one or more characteristics of the requested communications service,
in which, when two or more of said taken-up usage schemes correspond to the identified one or more characteristics of the requested communications service, the method further comprises: identifying temporal applicability conditions associated with each said taken-up usage scheme on the basis of the stored characteristics of the two or more said taken-up usage schemes; and applying said two or more taken-up usage schemes in an order determined by the respective temporal applicability conditions.

## Description

### Field of the Invention

The present invention relates to a system and method of controlling usage of communications services requested by a subscriber in a communications network, particularly, but not exclusively, for arrangements in which the communications network provides subscribers with access to a plurality of optional usage schemes.

### Background of the Invention

Various usage schemes for communications services are known, both in relation to pre-paid subscribers and contract subscribers. These schemes are intended to perform several functions, including retaining subscribers, increasing usage of the network resources, and generally improving the competitiveness of a network operator. Examples of known usage schemes include: pre-allocated "bundles" of call time or of messages, where a customer is allocated a fixed amount of "free" calls in return for a fixed service charge for a specified charging period; bundle rollover, in which a customer is permitted to roll-over unused parts of a bundle from a previous charging period to a next charging period; call discount, such as is described in international patent application having publication number WO03/026267, in which calls to a group of nominated numbers are charged at a discounted rate; and sliding scale charges, in which calls made within a specified period are charged at different rates dependent on previous usage within that period.

### Summary of the Invention

According to a first aspect of the present invention there is provided a method of controlling usage of a communications service requested by a subscriber in a communications network, the communications network providing subscribers with access to a plurality of optional usage schemes and storing data identifying optional usage schemes to which individual subscribers have taken up access, the network storing usage criteria for each of said plurality of optional usage schemes, said usage criteria defining characteristics of a communications service to which a respective usage scheme may be applied, the method comprising:
(i) identifying one or more characteristics of a communications service requested by a subscriber;
(ii) identifying one or more optional usage schemes to which the subscriber has taken up access; and
(iii) selecting at least one of said taken-up usage schemes, the selected taken-up usage scheme corresponding to the identified one or more characteristics of the requested communications service,
   in which, when two or more of said taken-up usage schemes correspond to the identified one or more characteristics of the requested communications service, the method further comprises
(iv) identifying temporal applicability conditions associated with each said taken-up usage scheme on the basis of the stored characteristics of the two or more said taken-up usage schemes; and
(v) applying said two or more taken-up usage schemes in an order determined by the respective temporal applicability conditions.

Examples of optional usage schemes include so-called bonus packages, where the associated usage criteria include data specifying an amount of service (e.g. in terms of number of services and/or duration of services) for which the associated usage scheme is applicable, together with data specifying the conditions under which the usage scheme is applicable. The usage schemes are optional in so far as subscribers can elect to supplement their network subscription therewith, and are different to bundles of call time (or numbers of SMS messages) that are implicitly included in a network subscription.

Embodiments of this aspect of the invention provide a means of managing interactions between two or more such optional taken-up usage schemes that are applicable in respect of a requested service, and application of a respective usage scheme is dependent on how the temporal applicability conditions match, or otherwise, parameters of the requested communications service. Thus in the case of a subscriber having taken up two usage schemes relating to SMS messages, each having a set of temporal applicability conditions, when the subscriber requests network resources required to transmit an SMS, a process according to the invention is applied to work out which of the usage schemes is applicable to the requested service.

Preferably the method includes monitoring usage of the requested communications service on the basis of said identified temporal applicability conditions and repeating step (iii) after the monitored usage satisfies a specified temporal condition. In the case of a voice call, this feature of embodiments of the invention is particularly advantageous, since it essentially provides "break points" at which the temporal applicability conditions are reviewed - as the call progresses ― thereby facilitating selection of a different usage scheme to apply to the communications service (as appropriate). In one arrangement the temporal applicability conditions include duration of the requested service, and in another the temporal applicability conditions include a time at which a service is requested.

Conveniently the method includes storing data identifying prioritisation information for use in selection between said optional usage schemes, and the method includes reviewing the identified temporal applicability conditions during provision of the network service in an order determined by said prioritisation information. Associating a given usage scheme with a priority provides a means of rating the applicability of the given usage scheme relative to that of any other usage scheme, thereby specifying an order in which taken-up usage schemes should be applied.

Preferably usage criteria associated with a usage scheme includes any one, or some, of the following, non-limiting examples: money spent within a specified period; usage of resources within a specified period; and/or a number of services requested within a specified period.

In one arrangement the method can additionally include consulting service-dependent conditions such as durations of a call during provision of the service, and, when such conditions are satisfied, applying steps (iv) and (v) in relation to whichever point in the service has been reached when the conditions were satisfied. For example, the method might be configured to perform step (iv) every 60 seconds or so, which, in the case of the requested service being a voice call, provides a means of reviewing the duration of the call thus far and/or the moment in time against usage criteria of the taken-up usage schemes. Alternatively the service-dependent conditions could be set based upon the usage criteria associated with each taken-up usage scheme.

In the case of subscribers having a particularly intense calling and/or text messaging usage requirement, more than one usage scheme might be of interest; for example, a subscriber might wish to send text messages to his friends and family on a Sunday and also may have to send various work-related SMS messages during the week; as a result he may wish to make use of several different usage schemes. From the foregoing it will be appreciated that embodiments of the invention provide a means of controlling the interrelationship between the schemes.

According to a second aspect of the present invention there is provided a method of controlling usage of communications services requested by a subscriber in a communications network, the communications network providing subscribers with access to a plurality of optional usage schemes and storing: data identifying optional usage schemes to which individual subscribers have taken up access; data identifying prioritisation information for use in selection between said optional usage schemes; and data identifying usage criteria for each of said plurality of optional usage schemes, said usage criteria defining characteristics of a communications service to which a respective usage scheme may be applied, the method comprising:
(i) identifying one or more characteristics of a communications service requested by a subscriber;
(ii) identifying one or more optional usage schemes to which the subscriber has taken up access;
(iii) selecting at least one of said taken-up usage schemes, the selected taken-up usage scheme corresponding to the identified one or more characteristics of the requested communications service;
(iv) monitoring usage of said requested communications service; and
(v) accounting for said monitored usage in relation to an unselected taken-up usage scheme in dependence on prioritization between said selected taken-up usage scheme and the unselected taken-up usage scheme.

Embodiments according to the second aspect of the invention are directed towards managing interactions between usage schemes having disparate charging conditions. For example, a first usage scheme might allocate a number of free services in return for usage of a paid number of services, whilst a second usage scheme might allocate a specified number of services at a particular rate (where the rate is, for example, dependent on the time of day or on the number of services bought in bulk). When a subscriber has subscribed to two or more of such different usage schemes, the question of how the schemes should interact becomes particularly important, since, from the point of the network operator, it is disadvantageous to allow allocations at, say, corresponding to the first scheme, to count towards usage of the second scheme if the rate corresponding to the first scheme is lower than that corresponding to the second scheme; when the first scheme includes a certain amount of usage for free this problem is particularly acute. For example, consider the case where a first usage scheme allocates 50 SMS paid and 50 SMS for free, and a second usage scheme offers 25 SMS for 10p. In this example the first usage scheme would be assigned a higher priority than that assigned to the second usage scheme, and an embodiment of the invention would update data associated with the unselected taken-up usage scheme - which, when the second usage scheme (25 SMS for 10p) is applicable, is the first usage scheme (50 SMS for free and 50 SMS paid) - by an amount corresponding to monitored usage of services corresponding to the second usage scheme. Since usage schemes having a higher priority cannot count against those having a lower priority, usage meeting the criteria of the first usage scheme - and for which sending of text messages is, at least in part, for free - cannot count against the second usage scheme. Therefore, by appropriately assigning priorities to the respective usage schemes, this ensures that usage of the second usage scheme can count against that of the first (in this example, in respect of "50 SMS paid"), but not vice-versa; as a result, in the current example, use of the free SMS messages cannot count against the 25 SMS messages at 10p.

Preferably the method includes identifying applicability conditions associated with each said taken-up usage scheme and in which, when two or more of said taken-up usage schemes correspond to the identified one or more characteristics of the requested communications service, the selection of taken-up usage scheme is dependent on the respective applicability conditions meeting said characteristics associated with the requested communications service. In one arrangement the applicability conditions are reviewed during provision of the network service in an order determined by said prioritisation information, and include an amount of network resource available, amount of money spent, and/or temporal conditions associated with usage of network resource.

According to a third aspect of the present invention there is provided a method of controlling usage of network resources associated with communications services requested by a subscriber in a communications system, the communications system providing subscribers with access to a plurality of optional usage schemes and storing data identifying optional usage schemes to which individual subscribers have taken up access, at least one of said optional usage schemes specifying a relationship between units of a first network resource associated with delivering a telecommunications service and units of a second, different, network resource associated with delivering a telecommunications service, the method comprising:
(i) monitoring usage of the first network resource by the subscriber;
(ii) identifying one or more optional usage schemes to which the subscriber has taken up access;
(iii) selecting at least one of said taken-up usage schemes, the selected taken-up usage scheme corresponding to the monitored usage of the first network resource;
(iv) assigning units in respect of the second network resource according to said monitored usage and in dependence on the selected usage scheme; and
(v) storing data indicative of the assigned units for use in allocating second network resources to the subscriber.

Embodiments according to the third aspect of the invention provide a means of accruing amounts of the second resource based on usage of the first resource. The first resource relates to a different type of service to that of the second resource, and it can also relate the same type of service, but to different parameters of the service (e.g. different times of day, different destination addresses, different discount rates and the like). For example, a subscriber might wish to increase the discount rate applied to certain types of voice calls, or have a preferred billing rate operate at certain times of the day, in return for which the subscriber agrees to make a specified number of video calls. Such schemes would be extremely useful to subscribers who, for some reason, are obliged to make certain types of calls of a defined duration. Businesses could, for example, agree such a scheme with a network operator and offer "free" personal calls/messaging as an incentive for their staff (the calls/messaging actually being free to the company, since the usage scheme is based on the number of business calls that the company makes).

It will be appreciated that an integral part of allocating network resources involves identifying how usage of resources can be metered, since usage has to be charged for. The many and disparate usage schemes that are becoming increasingly available present considerable technical challenges to the network operator, not least of which include tracking actual usage of network resources and applying the usage both in respect of whichever resource type a usage scheme is applicable and of the period for which the scheme is applicable. In essence, the question for the network operator is how to design a system or systems that will support selection of usage schemes and allocate network resources accordingly, and embodiments of the various aspects of the invention provide solutions to this problem.

Further features and advantages of the invention will become apparent from the following description of preferred embodiments of the invention, given by way of example only, which is made with reference to the accompanying drawings.

### Brief Description of the Drawings

Figure 1 is a schematic diagram showing a conventional cellular communications network within which embodiments of the invention operate;
Figure 2a is a block diagram schematically illustrating an arrangement of data processing and storage functions for handling or controlling provision of a telecommunications service according to an embodiment of the present invention;
Figure 2b is a block diagram schematically illustrating data flows occurring between the data processing and storage functions of Figure 2a;
Figure 3a is a schematic diagram showing a subscriber-independent usage schema defining a usage scheme;
Figure 3b is a schematic diagram showing applicability data, specifying the type of calls and service requests to which the usage scheme of Figure 3a can apply;
Figure 4 is a schematic diagram showing an example of an object specifying (a) usage scheme(s) to which the subscriber has access;
Figure 5 is a schematic diagram showing attributes of three different usage schemes to which a subscriber has access;
Figure 6 is a flow diagram showing steps carried out by the data processing functions shown in Figure 2a, according to an embodiment of the invention;
Figure 7a is a schematic diagram showing changes to a first usage scheme object associated with the subscriber according to a first embodiment of the invention;
Figure 7b is a schematic diagram showing changes to a second usage scheme object associated with the subscriber according to a first embodiment of the invention;
Figure 7c is a schematic diagram showing changes to a third usage scheme object associated with the subscriber according to a first embodiment of the invention;
Figure 8 is a schematic diagram showing attributes of a further three usage schemes to which a subscriber has access;
Figure 9a is a schematic diagram showing changes to a first usage scheme object associated with the subscriber according to a second embodiment of the invention;
Figure 9b is a schematic diagram showing changes to a second usage scheme object associated with the subscriber according to a second embodiment of the invention;
Figure 9c is a schematic diagram showing changes to a third usage scheme object associated with the subscriber according to a second embodiment of the invention; and
Figure 10 is a schematic diagram showing interaction between different usage schemes according to a further aspect of the invention.

### Detailed description of the preferred embodiments of the invention

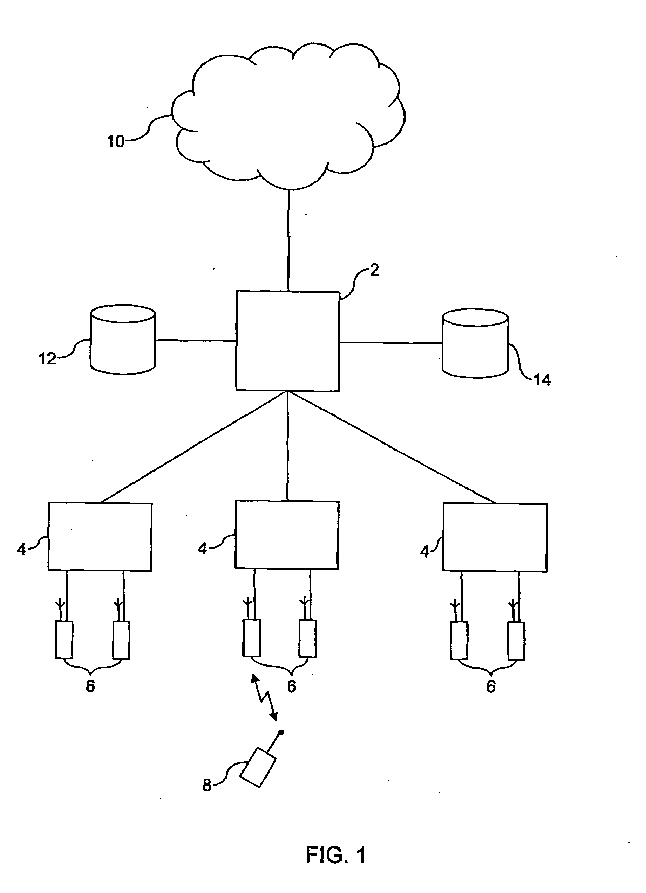

As described above, embodiments of the present invention are concerned with allocating resources in dependence on various usage schemes, in particular schemes that are dependent on interaction between different service types or schemes that are dependent on two or more optional usage schemes. Before describing features of the embodiments in detail, a communications environment within which the embodiments are arranged to operate will be described. Figure 1 shows a cellular communications network, such as a GSM network, comprising mobile switching centre (MSC 2) connected via communications links to a number of base station controllers (BSCs) 4. The BSCs 4 are dispersed geographically across areas served by the MSC 2. As is known in the art, each BSC 4 controls one or more base transceiver stations (BTSs) 6 located remote from, and connected by, further communications links to, the BSC. Each BTS 6 transmits radio signals to, and receives radio signals from, mobile stations 8 which are in an area (known as a "cell") served by that BTS.

The MSC 2 is also connected via communications links to other MSCs, which are not illustrated, in the remainder of the communications system 10, and to a public switched telephone network (PSTN), public data network (such as the Internet), etc. which are not illustrated. The network is provided with a home location register (HLR) 12, which is arranged to provide the MSC 2 with data relating to a subscriber upon request (typically populating a visitor location register (VLR) 14, which is part of, or accessible by, the MSC 2). MSC 2 is capable of handling service provision for both postpay or contract subscribers and prepaid subscribers of the network in the area it serves. Thus, subscribers may originate or receive a range of data, including multimedia, video, voice, data or fax calls or sessions, short messages using the Short Message Service (SMS), email messages, enhanced or multimedia messages, and may access data resources over private or public data networks such as the Internet. Signalling and data in respect of services provided to mobile stations 8 is routed via MSC 2.

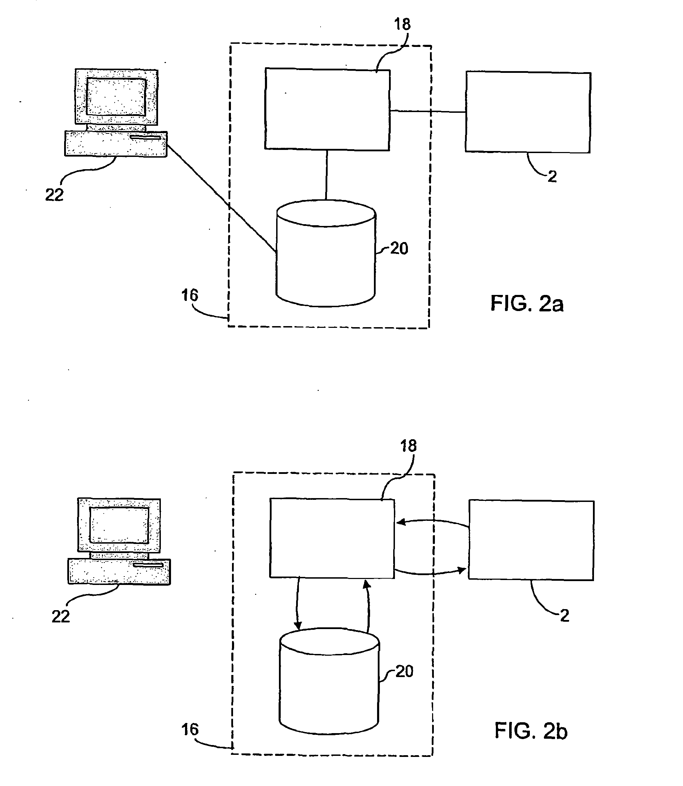

Figure 2a is a block diagram schematically illustrating an arrangement of data processing and storage functions for handling or controlling provision of a telecommunications service. Typically Intelligent Network (IN) protocols are used to control the provision of services to prepaid subscribers of the network. More specifically, in the case of prepaid subscribers using mobile stations 8, MSC 2 functions as a Service Switching Point (SSP), which is connected to and controlled by Service Control Point (SCP) 16 with which it communicates using the Intelligent Network Application Protocol (INAP). The specification of INAP is provided in European Telecommunications Standards Institute (ETSI) standard ETS 300 374-1 incorporated herein by reference.

SCP 16 comprises a Prepaid Control Function (PCF) 18 connected to a Service Data Function (SDF) 20. PCF 18 is connected to MSC 2 with which it communicates using INAP as described above and is responsible for performing the data processing steps required to control the operation of MSC 2. SDF 20 is responsible for storing data relating to prepaid subscribers, such as prepaid account balance data for a subscriber, instance data relating to services currently being provided to a prepaid subscriber, and is connected to user terminal 22 for user entry and amendment of data stored in respect of a prepaid subscriber, such as the subscription to one or more optional usage schemes. The usage scheme data stored in SDF 20 may also be entered or amended by means of being connected to a mobile station 8 via data or signalling channels. The mobile station user interfaces described in International Patent Publication No. WO 00/76225 referred to above may be used for this purpose.

Although Figure 2a shows only one MSC 2, one SCP 16 and one user terminal 22, it will be understood that implementations normally involve multiple: physical data processing devices performing each of these functions. The data processing devices may be connected together through a signalling data network comprising one or more signalling transfer points (STPs) which provide packet-switching for the signalling network using the Signalling System 7 (SS7) protocol stack.

Figure 2b is a block diagram schematically illustrating data flows occurring between the data processing and storage functions of Figure 2a. Typically, MSC 2 passes an INAP request message to PCF 18 requesting an instruction in respect of a new or ongoing provision of a service to a prepaid subscriber. The request message normally provides information concerning the service and the identity of the subscriber. PCF 18 determines how to handle the request on the basis of the service information provided by MSC 2, on the basis of generally applicable information concerning service provision and on the basis of characteristics or information concerning the prepaid subscriber which are obtained by invoking a method of SDF 20 using request message 26 and receiving response message 28. PCF 18 then passes an INAP response message 30 back to MSC 2 instructing it to perform an action.

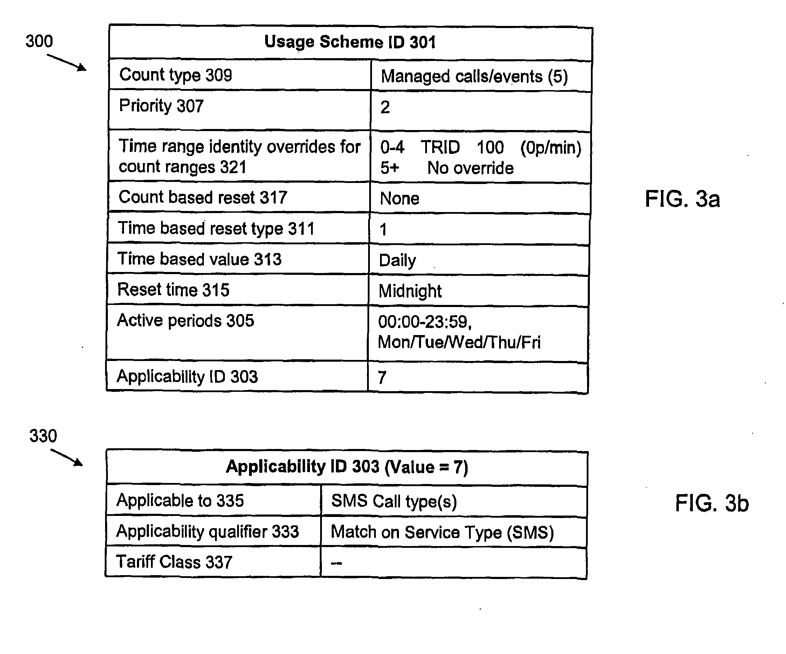

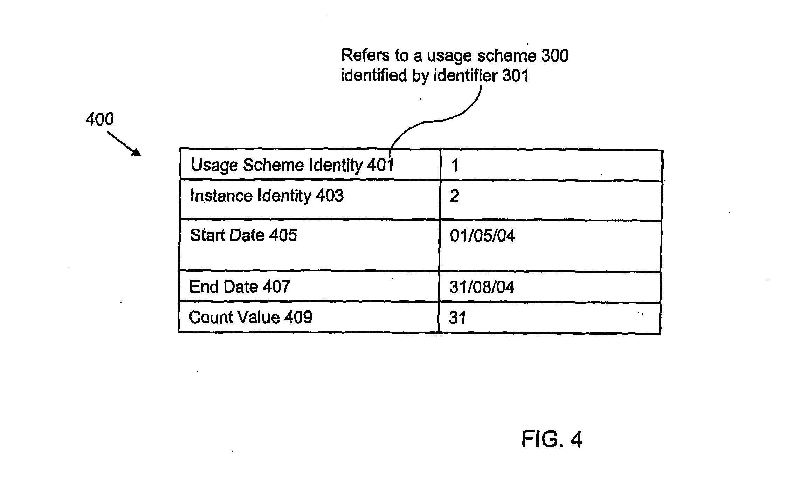

As described above, embodiments of the present invention are concerned with allocating resources in dependence on usage schemes, in particular schemes that are dependent on interaction between different service types or schemes that are dependent on two or more selectable usage schemes. Typically the PCF 18 is arranged to store system-specific data that are accessible to any type and class of subscriber whilst the SDF 20 is arranged to store subscriber-specific data, which, typically, links to data administered by the PCF 18. This arrangement minimises duplication of data and overheads when updating service-related data. Aspects of these usage schemes and the functionality of the SDF 20 and PCF 18 required to support and facilitate access thereto will now be described with reference to Figures 3a, 3b and 4.

Figure 3a shows an example of a subscriber-independent usage schema defining a usage scheme 300 stored in the PCF 18; it will be appreciated that many different usage schemes might be defined, and that, for convenience, they are each defined by means of one or more of the following usage criteria:
- Identity 301, which specifies a numeric identity for a usage scheme;
- Applicability Identity 303, which uniquely identifies a table that defines which types of service requests the usage scheme applies to;
- Active Periods 305, which defines the periods during which the usage scheme applies - and can therefore be deemed active - and includes data specifying the day(s) on which the usage scheme applies; the start time at which the usage scheme starts to apply and the end time at which the usage scheme ends;
- Priority 307, which identifies the priority associated with a respective usage scheme;
- Count Type 309, which specifies the entity that is counted by a usage scheme. Possible settings are:
   o Seconds Accumulated in usage scheme (value 0);
   o Chargeable Seconds Accumulated in usage scheme (value 1);
   o Pre-Bonus Chargeable Seconds Accumulated in usage scheme i.e. the Chargeable Seconds that would have been accumulated in the usage scheme had the usage scheme's Overriding Time Range Id not been applied (value 2);
   o Money Accumulated in usage scheme (value 3);
   o Pre-Bonus Money Accumulated in usage scheme i.e. the money that would have been accumulated in the usage scheme had the usage scheme's Overriding Time Range Id not been applied (value 4);
   o Number of Managed Calls/Events relevant to the usage scheme (value 5);
   o Number of Chargeable Calls/Events relevant to the usage scheme (value 6);
- Time Based Reset Type 311, which specifies a time-based criterion for resetting the usage scheme's count. Examples of possible settings include:
   o Never (value 0) - The Count never resets based on Time;
   o Periodic (value 1) - The Count resets every n days;
   o Day Based (value 2) - The Count resets on specified days (every Tuesday for example);
   o Monthly (value 3) - The Count resets on the same day each month;
- Time Based Reset Value 313, which quantifies the Time Based Reset Criterion and can include the following resets:
   o Periodic Resets - defines the number of days between resets (a number in the range 0 to 255);
   o Day Based Resets - defines the days on which the count resets (a number in the range 1 to 127 interpreted as follows:
      bit 0 - set if Period includes Monday (bit 0 = least significant bit)
      bit 1 - set if Period includes Tuesday
      bit 2 - set if Period includes Wednesday
      bit 3 - set if Period includes Thursday
      bit 4 - set if Period includes Friday
      bit 5 - set if Period includes Saturday
      bit 6 - set if Period includes Sunday

      For example, a value of 36 (24₁₆) defines a count that resets on Wednesdays and Saturdays;
   o Monthly Resets - defines the Day of the Month on which the usage scheme Resets (0 .. 31). A value of 0 indicates that the reset day is determined to be the first day on which the usage scheme is used;

- Reset Time 315, which specifies the time of day, within a reset period, at which the usage scheme count resets;
- Count Based Reset Flag 317, which specifies whether a count-based criterion for resetting the usage scheme's count exists (e.g. can have a value of 0 if no such criterion exists or 1 otherwise) and could be used to reset the usage scheme instead of a time-based criterion;
- Count Based Reset Value 319, which defines any count-based reset criterion and contains the value at which the count is reset (this field only applies if the count based reset flag is set);
- Overrides 321, which define the Time Range Identity to be used according to the usage scheme's Count Value. Each override has a count range lower limit, a count range upper limit and an overriding time range identity. The lower limit specifies the lowest value of the usage scheme's Count for which the Override applies whilst the upper limit for the Override is one less than the lower limit of the next Override, or infinity for the usage scheme's last Override. The overriding time range identity specifies the time range to use whilst the usage scheme's Count is in the Override's Range (a number in the range 0 to 256 with 256 implying 'no override'), and is used to determine whether or not a given usage scheme is applicable.

As can be seen in Figure 3a, each definition of a usage scheme is split over multiple lines, the first two lines defining the singly occurring attributes, the next one or more lines each defining an active period for the usage scheme, which in turn is followed by one or more lines that each define on override range. The skilled person will appreciate that not all of these criteria are essential; for example, if the reset criterion is based on time only, the reset entries corresponding to count values might not be required, and vice-versa.

In addition, and referring to Figure 3b, the PCF 18 comprises usage scheme applicability data 330, specifying the type of calls and service requests to which a usage scheme can apply. The usage criteria can comprise following:
- Applicability Identity 303, defining the identity of the usage scheme applicability definition;
- Applicability Qualifier 333, which qualifies the Applicability criterion by settings such as 'Match on Call Type', 'Match on Tariff Class' or 'Match on Call Type and Tariff Class';
- Service Request Type 335, defining the type of service to which the applicability definition relates; and
- Tariff Class 337, defining the tariff class to which the applicability definition relates.

Whilst Figure 3b only shows a single entry (SMS) corresponding to Applicability Identity value 7, it will be appreciated that there can be several entries corresponding to this value, since several different usage schemes can be provided in relation to a given service request type and/or tariff class 335, 337.

The applicability data 330 are accessed when a service request is received from a subscriber, in order to identify whether or not the incoming service request is one for which there is a usage scheme available (i.e. a check is made as to whether or not there is an applicability ID 303 entry corresponding to this service type (as identified by fields 335 and/or 337)). In the event that there is an associated applicability ID entry, the SDF 20 then checks whether the subscriber has subscribed to a usage scheme corresponding thereto. As will be described in more detail below, this check involves identifying the usage scheme ID 301 corresponding to the identified applicability ID 303 (via table 300), and checking whether the subscriber data include an entry corresponding to the identified usage scheme ID 301.

Turning now to data stored in the SDF 20, in one arrangement (in the case of a prepaid subscriber type) subscriber data are stored as a hierarchy of object classes, with, for example, the subscriber's MSISDN (mobile phone number) in international format (e.g. 07790123456) at the root of the class. In addition, and in accordance with known methods, there are data defining the access rights, account status etc. of the subscriber. When a subscriber subscribes to a selected usage scheme, the SDF 20 populates an object with data that point to the selected usage scheme 300 defined in the PCF 18. This/these object(s) is/are thereafter accessed upon receipt of a corresponding service request from the subscriber in order to identify how the service request should be charged.

Figure 4 shows an example format of one such subscriber data object 400, which comprises the following entries:
- Usage scheme Identity 401, specifying the numeric identity of the usage scheme (this is a reference into field 301 of the usage schema, and fulfills the task of "pointing" between subscriber-specific data stored in the SDF 20 and data stored in the PCF 18);
- Instance Identity 403, which uniquely identifies one or more instances of the same usage scheme to which the subscriber has applied;
- Validity Start Date 405, which specifies a date on which the usage scheme becomes valid (the start time can be 00:00:00 on the specified day, or an alternative time);
- Validity End Date 407, which specifies a date on which the usage scheme ceases to be valid (if the start date were set to 00:00:00, the usage scheme would remain valid up to and including 23:59:59 on the specified day); and
- Count Value 409, which specifies the number of counts accumulated in respect of the usage scheme for the subscriber.

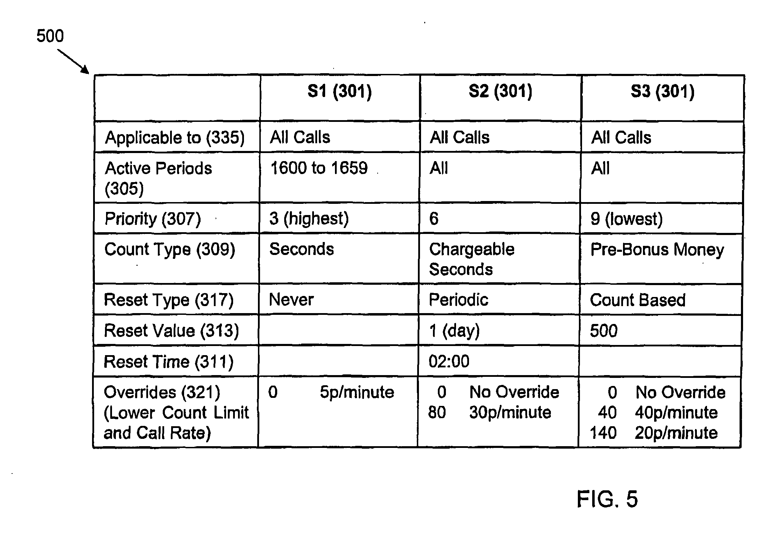

The functionality of, and interaction between, the SDF 20 and the PCF 18 will now be described by means of two examples, aspects of which are shown in Figures 5 - 9c. These examples illustrate features of the first aspect of the invention, namely usage of services in accordance with two or more usage schemes that each relate to the same type of service request.

In respect of metered services, such as voice calls, charges are determined on the basis of a measurement of a characteristic of the service, such as the duration of the service. There are therefore two main types of processing performed by SCP 16: initial service processing and ongoing chargeable service processing. For example, on being required to set up a new voice call, MSC 2 passes a Determine_Call_Action INAP request message to PCF 18 requesting instruction on how to handle the call request based on the telephone number of the prepaid subscriber requesting the call, and optionally the original called number, chargeable destination number (for example, if the call is forwarded) and the call type (mobile originated or call forwarded). Using the information provided, PCF 18 invokes a Get_Call_Action method of SDF 20 to determine how to handle the call request, and whether or not it is to be charged for. The SDF 20 might determine that the call is to be released or connected to a specified telephone number, such as that of a Customer Service Representative (CSR) or Interactive Voice Response (IVR) unit. Alternatively, it may determine that the call is to be connected as requested, either as a chargeable or non-chargeable call, and, if chargeable, determines how the call should be charged.

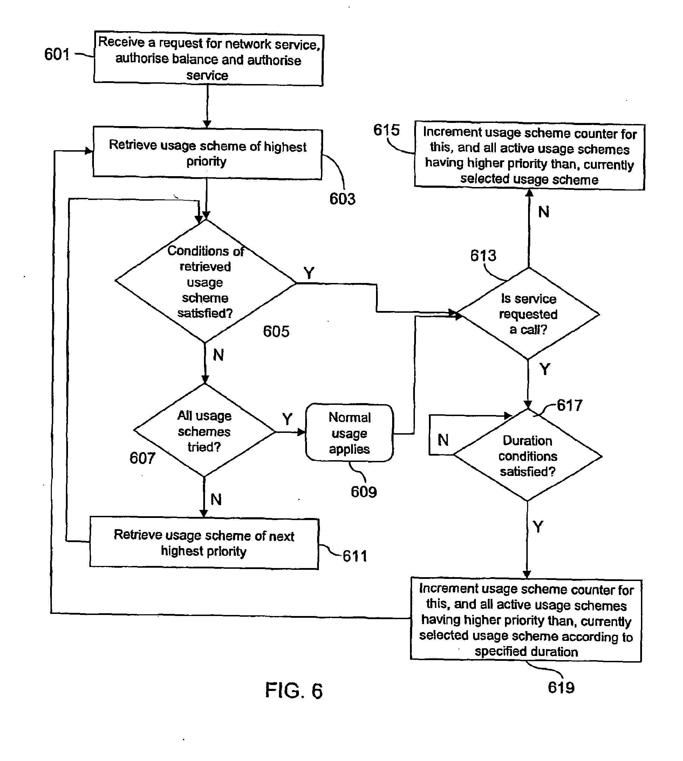

Figure 6 shows the steps performed by the SDF 20, having received a request from the PCF 18 to handle usage of a service. At step 601 the SDF 20 accesses, in a known manner, records corresponding to the subscriber, which include details of usage schemes to which the subscriber has access, and, by means of identifying the type of service requested (i.e. voice call, message etc.), the SDF 20 identifies one or more schemes corresponding to the service. In the current example the service type is a voice call (which, it turns out, lasts from 15:58:10 to 16:00:10), and the corresponding schemes are S1, S2 and S3, details of which are summarised in table 500 shown in Figure 5. In addition the SDF 20 checks that the subscriber has sufficient funds for a call to proceed; such verification methods are known in the art and will not be described in detail. Assuming the call to be authorized, the call is allowed to continue and its progress, in particular the time that the call starts and ends, is monitored by the SDF 20 for usage once the call has ended. Before describing how a call is rated (shown in Figure 6 (steps 603 - 619)), a few words will be said on how a call is processed. Referring briefly to Figure 6 it can be seen that step 617 involves reviewing certain "duration conditions" throughout the call; these conditions essentially serve to split a call, in particular, to divide the call into a plurality of call periods in dependence on certain predetermined criteria. In the example set out below, these criteria are as follows:
R1) Does the current time/duration of call thus far satisfy any of the conditions of a usage scheme retrieved at step 601;
R2) Does the duration of the current period (i) within the call (Δtᵢ) exceed a specified inter-period duration (T)? (Δtᵢ>T, where T is configurable and in this example is 30 seconds);
R3) Does the duration of the call (ΔC) thus far exceed a specified call duration (D) (ΔC > D, where D is configurable and in this example is 60 seconds)?

The skilled person will appreciate that other criteria could be used.

When a call is posthumously charged, the SDF 20 returns to the start of the call (in terms of the time that the call was placed) and identifies which of the usage schemes is applicable at this time (described in more detail below). Once an applicable usage scheme has been identified (step 605, 609 as appropriate) the call enters into a first period (i=1) and the duration of this first period, together with the time of the call, are monitored against conditions R1, R2 and R3. Once one of these conditions has been satisfied - step 617 ― the SDF 20 proceeds to step 619 (described in more detail below), the call enters into the next period (i=2) and the process repeats until the call has ended. In the example described below the call comprises six Periods: Period 1 extends between 0 and 19 seconds because at 20 seconds the SDF 20 identifies that usage scheme S3 becomes applicable thereafter (condition R1 satisfied); period 2 extends between 20 and 49 seconds because the SDF identifies that condition R2 is satisfied; period 3 extends between 50 and 59 seconds because the SDF 20 identifies that condition R3 is satisfied; period 4 extends between 60 and 79 seconds because the SDF 20 identifies that usage scheme S2 becomes applicable thereafter (condition R1 satisfied); period 5 extends between 80 and 109 seconds because the SDF 20 identifies that usage scheme S1 becomes applicable thereafter (condition R1 satisfied); and period 6 extends between 110 and 119 seconds because the call ends at 120 seconds.

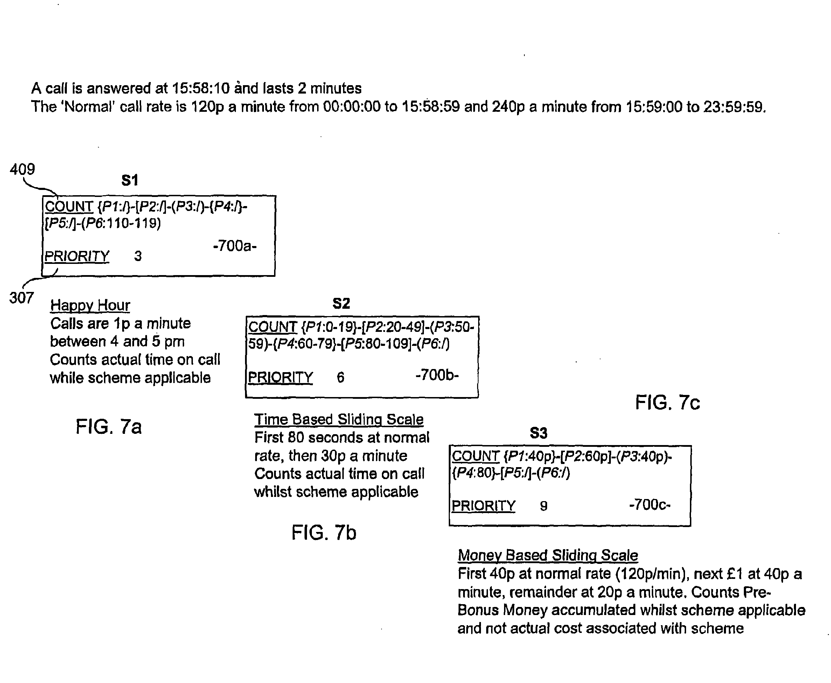

Figures 7a, 7b and 7c show updates to subscriber object data 700a, 700b, 700c at the ends of each usage period; each object 700a, 700b, 700c represents an instance of a subscriber data object 400 and corresponds to a different usage scheme S1, S2, S3 respectively taken up by the subscriber. The Figures show modifications, in particular changes to the count value, corresponding to a respective usage scheme S1, S2, S3 during provision of a network service. In terms of changes to the SDF 20, these count values will be updated in fields 409 associated with respective subscriber data objects 700a, 700b, 700c.

It will be appreciated from the foregoing that there are three usage schemes in this example, and that the schemes are ordered such that scheme S1 has a higher priority than scheme S2, which has a higher priority than scheme S3. Accordingly, in the event that all three schemes S1, S2, S3 are active and scheme S2 is applicable, the count values corresponding to both S1 and S2 will be updated (S3 being unaffected). In the event that all three schemes S1, S2, S3 are active and scheme S3 is applicable, the count values corresponding to all three schemes will be updated. In the event that only usage schemes S2 and S3 are active and scheme S2 is applicable, only the count value corresponding to S2 will be updated, whereas when S3 is applicable, the count values corresponding both to S2 and S3 will be updated. These interactions will become clear from the following examples.

### Period 1(0 to 19 seconds inclusive: 15:58:10 - 15:58:29)

At step 603 the SDF 20 identifies which of the usage schemes has the highest priority by means of respective entries 307 (having identified the usage scheme objects 300 and thence respective priority entries 307 via identities 401 in objects 700a, 700b, 700c); in this example scheme, S1 has the highest priority, so the SDF 20 accesses data relating to this scheme S1 in order to identify whether or not it is applicable to the service request. Review of the current time (15:58:10) against the applicable periods entry 305 shows that scheme S1 is not active at the current time (step 605), so the SDF 20 retrieves the usage scheme S2 having the next highest priority (steps 607 and 611), and repeats step 605 in respect of scheme S2. Review of the duration of the call against overrides 321 shows that scheme S2 is not applicable at the current time, so the SDF 20 retrieves usage scheme S3 having the next priority; again, review of usage scheme S3 shows that it is not applicable either, and since there are no more usage schemes available, the normal usage rate applies (step 609).

The SDF 20 then monitors the time and duration of period 1 against conditions R1, R2, R3 as described above (step 617). When one of the conditions is deemed to have been met (in this case R1) the counters 409 corresponding to those usage schemes that are active for the specified duration (here S2 and S3 only) are incremented (step 619) in accordance with their respective count values (time and money spent respectively). This is shown in Figures 7a, 7b, 7c, where the count values of only the active usage schemes S2 and S3 are incremented, whilst the count value corresponding to usage scheme S1 is blank for period 1.

### Summary of Period 1 (0 to 19 seconds inclusive)

Usage schemes S2, S3 are active, but no usage schemes are applicable. All active schemes are updated; actual charge based on normal charges.
Thus no overriding Usage Scheme and charge = 20 seconds at 120p/min = 40p
Time Sliding Scale Usage Scheme S2 Count → 20 seconds
Money Sliding Scale Usage Scheme S3 Count → 40 pence

### Period 2 (20 to 49 seconds inclusive: 15:58:30-15:58:59)

Once the first period has expired, step 603 is again repeated for a second period. As for the preceding period, the current time is outside of the active periods entry 305, so usage scheme S1 is not active. The SDF 20 proceeds to retrieve scheme S2 having the next highest priority (step 611); since the duration of the call by the end of this period will only have been 49 seconds, the overrides 321 condition is again not satisfied either, so the SDF 20 retrieves the last scheme S3 (step 611), which, because more than 40 pence will have been spent, is applicable. Accordingly, at step 613 the SDF 20 ascertains that the requested service is a call, and proceeds to monitor the time and duration of period 1 against conditions R1, R2, R3 as described above (step 617). When one of the conditions is deemed to have been met (in this case R2) the counters corresponding to the applicable usage scheme (S3) and those that are both active and have a higher priority (here S2 only) are incremented. This is shown in Figures 7a, 7b, 7c, where the count values of usage schemes S2 and S3 are incremented, whilst the count value corresponding to usage scheme S1 is blank for period 2.

### Summary of Period 2 (20 to 49 seconds inclusive)

S2, S3 are active, and S3 is applicable: since priority of S2 is higher than that of S3, count values corresponding to both S2 and S3 require updating to reflect usage.
Money Sliding Scale Usage Scheme overrides so charge = 30 seconds at 40p/min = 20p (Pre Bonus Call Rate = 120p/min). Actual (cumulative) charge → 60p
Time Sliding Scale Usage Scheme S2 Count → 20 + 30 = 50 seconds
Money Sliding Scale Usage Scheme S3 Count → 40 + 60 = 100 pence (calculated based on Pre-Bonus Charge = 30 seconds at 120p/min = 60p)

### Period 3 (50 to 59 seconds inclusive: 15:59:00 - 15:59:09)

Once this second period has expired, step 603 is again repeated for a third period. As for the preceding period, the current time falls outside of the active periods entry 305, so usage scheme S1 is not active. The SDF 20 proceeds to retrieve scheme S2 having the next highest priority (step 611); since the duration of the call by the end of this period will only have been 59 seconds, the overrides 321 condition is again not satisfied either, so the SDF 20 retrieves the last scheme S3 (step 611), which is applicable. Accordingly, at step 613 the SDF 20 ascertains that the requested service is a call, and monitors the time and duration of period 1 against conditions R1, R2, R3 as described above (step 617). When one of the conditions is deemed to have been met (in this case R3) the counters corresponding to the applicable usage scheme (S3) and those that are both active and have a higher priority (here S2 only) are incremented This is shown in Figures 7a, 7b, 7c, where the count values of usage schemes S2 and S3 are incremented, whilst the count value corresponding to usage scheme S 1 is blank for period 3

### Summary of Period 3 (50 to 59 seconds inclusive)

S2, S3 are active, and S3 is applicable: since priority of S2 is higher than that of S3, count values corresponding to both S2 and S3 require updating to reflect usage.
Money Sliding Scale Usage Scheme overrides so charge = 10 seconds at 40p/min = 6.67p (Pre Bonus Call Rate = 240p/min). Actual (cumulative) charge → 66.67p
Time Sliding Scale Usage Scheme S2 Count → 50 + 10 = 60 seconds
Money Sliding Scale Usage Scheme S3 Count → 100 + 40 = 140 pence (calculated based on Pre-Bonus Charge =10 seconds at 240p/min = 40p)

### Period 4 (60 to 79 seconds inclusive: 15:59:10 - 15:59:29)

Once this third period has expired, step 603 is again repeated for a fourth period. As for the preceding period, the current time is outside of the active periods entry 305, so usage scheme S1 is not active. The SDF 20 proceeds to retrieve scheme S2 having the next highest priority (step 611); since the duration of the call by the end of this period will only be 79 seconds, the overrides 321 condition is again not satisfied either, so the SDF 20 retrieves the last scheme S3 (step 611), which is again applicable. Accordingly, at step 613 the SDF 20 ascertains that the requested service is a call, and proceeds to monitor the time and duration of period 1 against conditions R1, R2, R3 as described above (step 617). When one of the conditions is deemed to have been met (in this case R1) the counters corresponding to the applicable usage scheme (S3) and those that are both active and have a higher priority (here S2 only) are incremented. This is shown in Figures 7a, 7b, 7c, where the count values of usage schemes S2 and S3 are incremented, whilst the count value corresponding to usage scheme S 1 is blank for period 4.

### Summary of Period 4 (60 to 79 seconds inclusive)

S2, S3 are active, and S3 is applicable: since priority of S2 is higher than that of S3, count values corresponding to both S2 and S3 require updating to reflect usage.
Money Sliding Scale Usage Scheme overrides so charge = 20 seconds at 20p/min = 6.67p (Pre Bonus Call Rate = 240p/min). Cumulative charge → 73.33p
Time Sliding Scale Usage Scheme S2 Count → 60 + 20 = 80 seconds
Money Sliding Scale Usage Scheme S3 Count → 140 + 80 = 220 pence (calculated based on Pre-Bonus Charge = 20 seconds at 240p/min = 80p)

### Period 5 (80 to 109 seconds inclusive: 15:59:30 - 15:59:59)

Once this fourth period has expired, step 603 is again repeated for a fifth period. As for the preceding period, the current time is outside of the active periods entry 305, so usage scheme S1 is not active. The SDF 20 proceeds to retrieve scheme S2 having the next highest priority (step 611); since the duration of the call is now in excess of 80 seconds, the overrides 321 condition is satisfied, so the SDF 20 proceeds to monitor the time and duration of period 1 against conditions R1, R2, R3 as described above (step 617). When one of the conditions is deemed to have been met (in this case R1) the counters corresponding to the applicable usage scheme (S2) are incremented; since the higher usage scheme S1 is not yet active at this time the counter values relating thereto remain unchanged again. This is shown in Figures 7a, 7b, 7c, where the count values of usage scheme S2 only is incremented, whilst the count values corresponding to usage schemes S1 and S3 are blank for period 5.

### Summary of Period 5 (80 to 109 seconds inclusive)

S2, S3 are active, and S2 is applicable: since priority of S2 is higher than that of S3, count values corresponding only to S2 require updating to reflect usage.
Time Sliding Scale Usage Scheme overrides so charge = 30 seconds at 30p/min = 15p. Cumulative charge → 88.33p
Time Sliding Scale Usage Scheme S2 Count → 80 + 30 =110 seconds
Money Sliding Scale Usage Scheme S3 Count unchanged at 220 pence

### Period 6 (110 to 119 seconds inclusive: 16:00:00 - 16:00:09)

Once this fifth period has expired, step 603 is again repeated for a sixth period. Unlike all of the other preceding periods, the current time is within the applicable periods entry 305 for usage scheme S1, so usage scheme S 1 is active. The SDF 20 proceeds to monitor the time and duration of period 1 against conditions R1, R2, R3 as described above (step 617). Since in this case the call ends before a condition is deemed to have been met, the call simply ends and the counters corresponding to the applicable usage schemes (S1) are updated.

Usage schemes S2 and S3 have a lower priority than that of usage scheme S1, the counter values relating thereto remain unchanged. This is shown in Figures 7a, 7b, 7c, where the count values of only usage scheme S1 is incremented, whilst the count value corresponding to usage schemes S2 and S3 are blank for period 6.

### Summary of Period 6 (110 to 119 seconds inclusive)

S1, S2, S3 are active, and S1 is applicable: since priority of S1 is higher than those of S2 and S3 count values corresponding only to S1 require updating to reflect usage.
Time Sliding Scale Usage Scheme S1 overrides so charge = 10 seconds at 5p/min = 0.83p. Cumulative charge → 89.16p
Time Sliding Scale Usage Scheme S1 Count → 10 seconds
Time Sliding Scale Usage Scheme S2 Count unchanged at 110 seconds
Money Sliding Scale Usage Scheme S3 Count unchanged at 220 pence

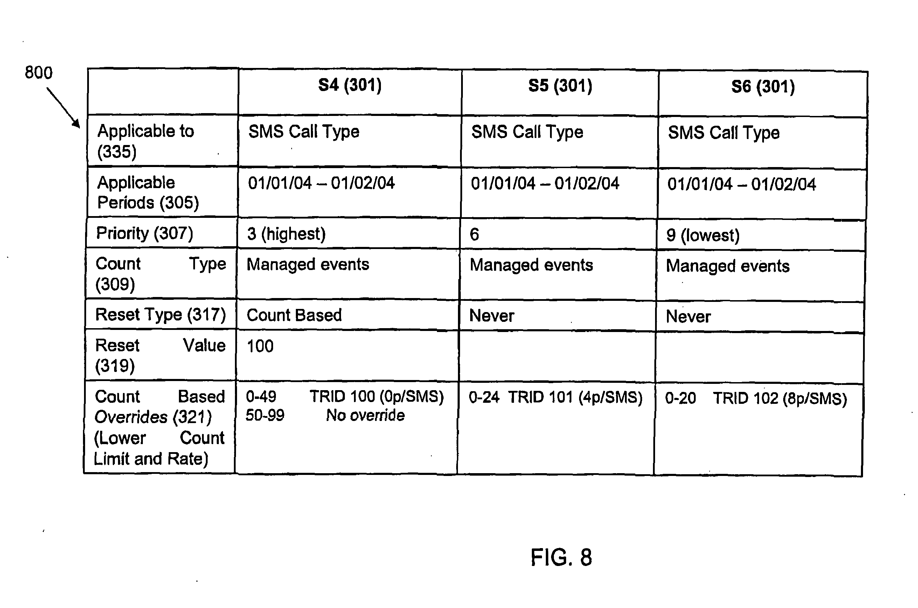

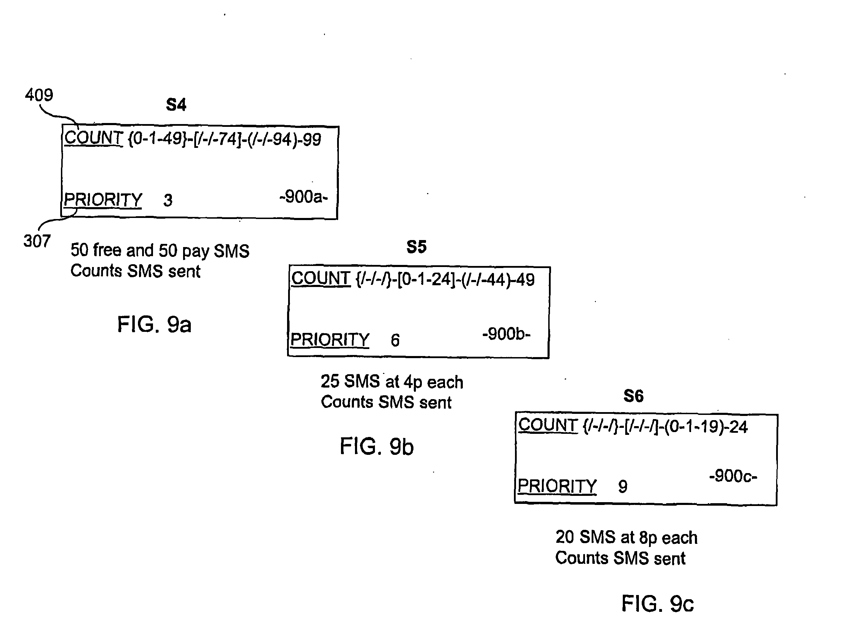

A second example will now be described, in which the requested service involves sending of messages using the short message (SMS) service. In this example, each service request is a single and self-contained entity (unlike the case of a voice call, in which the call is effectively split into portions, each of which is subject to analysis against available usage schemes). Figure 8 is a table 800 showing an example of three usage schemes S4, S5, S6, which are identified as being relevant to the subscriber in relation to transmission of SMS messages. As can be seen from the table 800, usage scheme S4 allocates 50 free SMS messages for 50 charged messages, resetting after 100 messages have been sent and repeating indefinitely; usage scheme S5 allocates 25 SMS messages at 4p/SMS, whilst usage scheme S6 allocates 20 SMS messages at 8p/SMS. In operation, and referring to Figure 6, the SDF 20 identifies an applicable usage scheme from those available (steps 603, 605), based on the conditions associated with a particular usage scheme and the message being sent, and modifies the count value(s) of corresponding subscriber objects 900a, 900b, 900c, as shown in Figures 9a - 9c (step 615). This example will now be described with reference to Figures 6 and 9a - 9c, in relation to successively sent SMS messages within the active period of 01 January 2004 - 01 February 2004 (specified in field 305).

### First Message (counter 0)

At step 603 the SDF 20 identifies which of the usage schemes has the highest priority by means of entry 307; in this example scheme, S4 has the highest priority, so the SDF 20 then accesses data relating to this scheme S4 in order to identify whether or not it is applicable to the service request. The current message number (0) satisfies the condition of scheme S4 (step 605), so the count value in relation to this scheme is incremented by one, as shown in Figure 9a. The count values in relation to schemes S5 and S6 are unchanged, since they are of a lower priority to scheme S4 and are thus unaffected by changes to scheme S4. In addition, the subscriber's account balance remains unchanged, since this message is free.

### Messages 1 - 49

For each of messages 1 - 49, usage scheme S4 will be applicable, and since this is of a higher priority than schemes S5 and S6, the count values corresponding to these schemes S5, S6 remain unchanged. In addition, the subscriber's account balance remains unchanged, since these messages are free.

### Messages 50 - 74

For each of messages 50 - 74, usage scheme S4 is no longer applicable, since the subscriber has exhausted use of his fifty free messages. Thus, despite the scheme S4 having a higher priority than that of the other usage schemes, the SDF 20 retrieves the scheme having the next highest priority (S5; steps 605, 607, 611), and tests the current messages against conditions associated with this scheme S5 (step 605). Usage scheme S5 charges 4p/SMS for 25 messages, the condition simply being based on the current message being any one of the first 25 for which the subscriber has to pay. Accordingly, each of the following 25 messages are charged at this reduced rate, while the counters relating to both scheme S4 and S5 are incremented accordingly (recalling that, since S4 has a higher priority than that of S5, scheme S4 continues to count those SMS for which the subscriber has been charged (step 619), and in this example, is not selective in the actual amount that is Paid).

### Messages 75 - 94

For each of messages 75 - 94, neither usage scheme S4 nor S5 is applicable, since the subscriber has exhausted use of his fifty free messages, and has already sent 25 chargeable messages at the reduced rate associated with scheme S5. Thus, the SDF 20 retrieves the scheme having the next highest priority (S6; steps 607, 611), and tests the current messages against conditions associated with this scheme S6 (step 605). This usage scheme S6 applies 8p/SMS for 20 messages, the condition simply being based on the current message being any one of the first 20 for which the subscriber has to pay for which this usage scheme S6 is applicable. Accordingly, each of the next 20 messages is charged at this reduced rate, and since both S4 and S5 have higher priority than that of S6, the counters relating to all of the schemes (S4, S5 and S6) are incremented accordingly (step 619).

### Messages 95 - 99

For each of messages 95 - 99, none of the usage schemes S4 - S6 is applicable, so the standard rate is applied for these messages (step 609), whilst, because each of the schemes is active, the count value is incremented for each usage object (step 615).

### Messages 100 - 149; 200 - 249 etc.

Since usage scheme S4 is cyclical (resetting after 50 messages have been paid for (i.e. 100 sent), as specified in reset value field 317) at step 603 the SDF 20 ascertains that scheme S4 is again effective, and so the following 50 messages are sent free, and the count value corresponding to this scheme S4 is incremented.

### Messages 149 - 199; 249 - 299 etc.

Once 50 free SMS messages have been sent, the next 50 SMS messages are chargeable; since usage schemes S5 and S6 are not periodic and only apply once, the standard usage rate is applied for messages 149 -199, 249 - 299 etc. (step 609).

In the examples given above it can be seen that operation of any given usage scheme effectively cascades into operation of another, such that completion of one usage scheme invokes operation of another scheme. The order in which respective usage schemes are invoked is dependent on the priority value associated with schemes and essentially determines a rate that is applied to a service, and if no usage schemes are active and/or applicable, messages, calls or indeed other service types, are charged at a standard rate (in other words the default stage of the cascade is "standard rate").

It will be appreciated from the foregoing that, because some usage schemes involve allocating a certain number of calls/events for free, the order in which this cascade of usage schemes is invoked is important. For example, in the second example set out above it can be seen that usage scheme S4 counts 50 charged SMS messages before it allocates any further free SMS messages. It is therefore important that, if other usage schemes allocate messages for free, such free allocations do not affect usage schemes that are conditional on usage of a specified number of messages (such as S4). Assigning priority to usage schemes is one way of ensuring that only certain messages can affect the count value accumulated by other usage schemes, since if a usage scheme has a lower priority than another usage scheme, the count value of the other usage scheme (of lower priority) is unaffected by activities associated with that of the higher priority usage scheme.

A further aspect of the present invention will now be described, in which usage/money spent in respect of a first service can be offset against usage of a second service. The first service can be a different type of service to the second service, and/or it can be the same type of service, but relate to different parameters of a service (e.g. different times of day, different destination addresses, different discount rates and the like). For example, a subscriber might wish to increase the discount rate applied to certain call types, or have a preferred billing rate operate at certain times of the day, in return for which the subscriber agrees to use a specified amount of airtime. Such a usage scheme would be extremely useful to subscribers who, for some reason, are obliged to use certain services, but who - of choice - frequently make use of a different service, and who would appreciate the possibility of offsetting usage of one type of network service against that accrued for a different type of network service. Businesses could, for example, agree such a scheme with a network operator and offer "free" personal messaging as an incentive for their staff (the messaging actually being free to the company, since the usage scheme is based on the number of business calls that the company makes).

The technical obstacles that are required to be overcome in order to provide such usage schemes are not trivial, since service events have to be both monitored for their applicability to a usage scheme (as per the first aspect of the invention) and charged in accordance with type and accrued credit, the latter being dependent on reliable recordal of previous events. More specifically, each event needs to be reviewed against potentially applicable usage schemes and a record maintained of all events that meet the criteria of a usage scheme, which is then available for use in evaluating a charge to apply to other events. This record also needs to be made available for review when service requests in respect of the second service are received, and indeed a mechanism is required to check service requests in order to identify those that qualify for a usage rate specified in the record.

A first example will be described in which the first service is of a different type to the second service: the first service being voice calls and the second service being SMS messages, the subscriber having subscribed to a usage scheme in which usage of voice calls can offset the price of SMS messages. The means by which usage of the first service (here voice calls) is monitored can be provided by the SDF 20 following the steps set out in Figure 6. A suitable usage scheme S7 (details not shown) might comprise the following fields (referring back to Figure 3): applicable to field 335, active periods field 305, priority field 307, count type field 309, reset type field 317, reset value field 319, reset time field 311, while a count value of call duration and/or money spent on a call is recorded in a data object in the manner described above with reference to Figures 7a, 7b and 7c. It is to be noted that there is no overrides field (321), since, in this aspect of the invention, the SDF 20 is simply recording the number of service events of the first type.

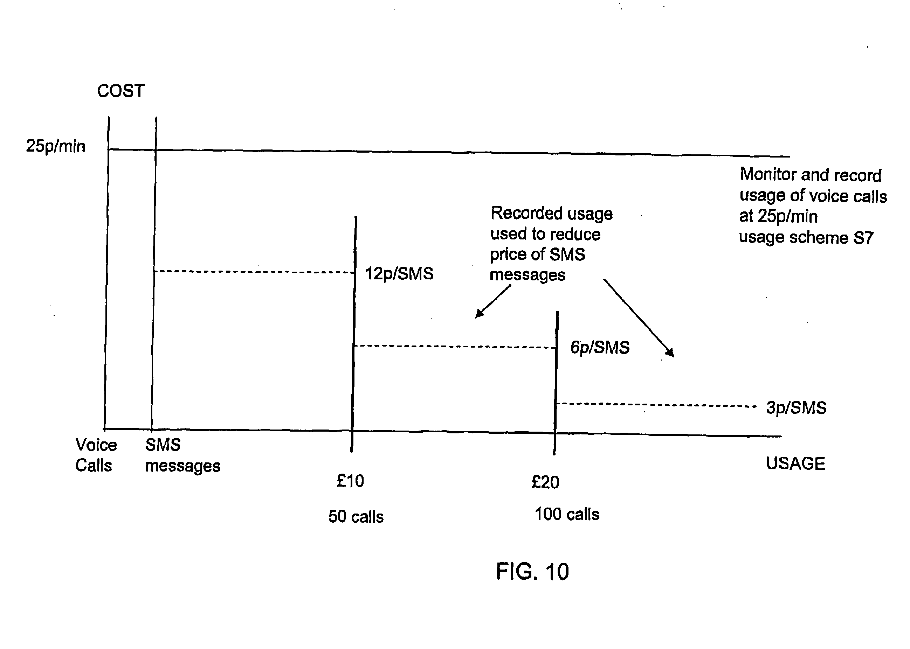

Figure 10 is a schematic illustration of call charges applied to the first service and a selected second service, as a function of usage (in absolute terms) of the first service. From the Figure it can be seen that when the amount of money spent on voice calls exceeds £10, the cost of sending SMS messages reduces to 12p/SMS, and when the amount exceeds £20, the cost of sending SMS messages reduces to 6p/SMS. The usage scheme S7 could alternatively monitor call duration, so that charges in respect of the second service could instead be dependent on call duration. In this latter arrangement a minimum call duration could be an additional criterion included in the usage scheme S7 (so that, if a call (first service) lasts less than the minimum duration, it does not contribute to credit against the second service).

This aspect of the invention can be viewed as effectively populating the parameters of usage schemes dynamically, since usage of the first service allows the subscriber to use other network resources at a lower rate, and this lower rate can be considered as a usage scheme with characteristics such as: "25 SMS messages at 6p/SMS".

Whilst in the arrangement described above usage of a first service offsets usage of a second service, it will be appreciated that usage of a first service could be used to offset usage of a third or more services, and that usage of combinations of services (e.g. first and second) can offset usage of another/other service(s). In the case of combinations of services, the usage scheme might specify a minimum usage of one or both of the services as a precondition to their respective usage contributing to credit in respect of a third (or further) service, and such minimum usage would be included as a parameter in the usage scheme.

### Additional Details

The PCF 18 can include a utility component (not shown) for managing automatic application and removal of usage schemes to and from subscribers. The utility component is arranged to examine each subscriber in the system (optionally batching the subscribers to reduce system load) and can be configured to 'Remove expired usage schemes, 'Reset time based counts' and 'Apply and remove globally relevant usage schemes'.

The usage schemes can be configured to reset their count values at certain times or at certain intervals. When the 'reset time based counts' operation has been selected, any usage scheme to which a subscriber has subscribed will have the count field 409 reset if necessary. The purpose of this function is to alleviate some system load by resetting the counts during low load periods, thereby removing the need to reset time based counts at the beginning of a call.

A usage scheme is deemed to have 'expired' if it can no longer have any effect on a subscriber. This will happen if the count in the usage scheme does not currently, and will never again, cause the usage scheme to override a time range identity. The count value must therefore fall within the range of the last of the list of overrides; this last range must not override the time range identity and the usage scheme must have no reset configured. The usage scheme is also deemed to have 'expired' if the Validity End Date 407 has passed.

Whilst in the above-described embodiments usage schemes are applied as applying to any type of call or subscriber type, it may be desired to restrict usage schemes to function only for particular types of call, for instance, mobile originating calls but not mobile terminating calls, or particular tariffs. Such restrictions can be made on call type, tariff class or both by means of tariff class 337 field. Thus a usage scheme can be configured to increment its count only when the call type is a particular value; only when the tariff class is a particular value; or when both the tariff class and call type are of particular values. For example, a usage scheme could be restricted to mobile originating calls and calls received when roaming in Peru; the scheme is then restricted to apply only to calls with call type 0 and to those which have both a call type of 6 and a tariff class of 100.

Whilst in the above embodiments each usage scheme is described as having a specified and fixed priority 307 stored in a table 300 in the PCF 18, the SDF 20 (or indeed the PCF 18) could instead utilize a prioritizing function that is arranged to assign priorities to those usage schemes deemed to be applicable to a requested service, in response to receipt of a request for service and at the time of selecting usage schemes. This would effectively allocate priorities to the applicable taken-on usage schemes in real time, and in relation to those applicable schemes only. As a result, a priority that is assigned to a usage scheme in respect of a first subscriber for a first service might be different to that assigned in respect of a different subscriber and/or different service.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of controlling usage of a communications service requested by a subscriber in a communications network, the communications network providing subscribers with access to a plurality of optional usage schemes and storing data identifying optional usage schemes to which individual subscribers have taken up access, the network storing usage criteria for each of said plurality of optional usage schemes, said usage criteria defining characteristics of a communications service to which a respective usage scheme may be applied, the method comprising:
(i) identifying one or more characteristics of a communications service requested by a subscriber;
(ii) identifying one or more optional usage schemes to which the subscriber has taken up access; and
(iii) selecting at least one of said taken-up usage schemes, the selected taken-up usage scheme corresponding to the identified one or more characteristics of the requested communications service,
in which, when two or more of said taken-up usage schemes correspond to the identified one or more characteristics of the requested communications service, the method further comprises
(iv) identifying temporal applicability conditions associated with each said taken-up usage scheme on the basis of the stored characteristics of the two or more said taken-up usage schemes; and
(v) applying said two or more taken-up usage schemes in an order determined by the respective temporal applicability conditions.

2. A method according to claim 1, including monitoring usage of the requested communications service on the basis of said identified temporal applicability conditions and repeating step (iii) after the monitored usage satisfies a specified temporal condition.

3. A method according to claim 1 or claim 2, in which said temporal applicability conditions include duration of the requested service and/or time at which a service is being provided.

4. A method according to any one of the preceding claims, including incrementing, upon provision of said service, a count representative of the number of services requested, and appending the count to at least one of the taken-up usage schemes.

5. A method according to any one of the preceding claims, including incrementing a count representative of a certain duration of services requested, and appending the count to at least one of the taken-up usage schemes.

6. A method according to any one of the preceding claims, in which the communications network stores data identifying prioritisation information for use in selection between said optional usage schemes, and the method includes reviewing the identified temporal applicability conditions during provision of the network service in an order determined by said prioritisation information.

7. A method according to claim 6, including appending the count to any usage scheme having a priority higher than that of an applied taken-up usage scheme.

8. A method according to claim 6 or claim 7, in which the priority of a usage scheme for which a charge for a requested service is zero is higher than the priority of a usage scheme in which a charge for a requested service is non-zero.

9. A method according to any one of the preceding claims, in which said usage criteria include any one, or some, of time at which a service is requested, date on which a service is requested, money spent within a specified period, usage of resources within a specified period, and/or a number of services requested within a specified period.

10. A method according to any one of the preceding claims, in which said characteristics of said requested communications service includes any one, or some, of time of requesting service, date of requesting service, and/or number of services that have been requested within a specified period.

11. A method of controlling usage of communications services requested by a subscriber in a communications network, the communications network providing subscribers with access to a plurality of optional usage schemes and storing: data identifying optional usage schemes to which individual subscribers have taken up access; data identifying prioritisation information for use in selection between said optional usage schemes; and data identifying usage criteria for each of said plurality of optional usage schemes, said usage criteria defining characteristics of a communications service to which a respective usage scheme may be applied, the method comprising:
(i) identifying one or more characteristics of a communications service requested by a subscriber;
(ii) identifying one or more optional usage schemes to which the subscriber has taken up access;
(iii) selecting at least one of said taken-up usage schemes, the selected taken-up usage scheme corresponding to the identified one or more characteristics of the requested communications service;
(iv) monitoring usage of said requested communications service; and
(v) accounting for said monitored usage in relation to an unselected taken-up usage scheme in dependence on prioritization between said selected taken-up usage scheme and the unselected taken-up usage scheme.

12. A method according to claim 11, in which said unselected taken-up usage scheme has a higher priority than the or each selected taken-up usage scheme.

13. A method according to claim 12, including updating data associated with the unselected taken-up usage scheme by an amount corresponding to monitored usage of each selected taken-up usage scheme.

14. A method according to any one of claim 11 to claim 13, including identifying applicability conditions associated with each said taken-up usage scheme and in which, when two or more of said taken-up usage schemes correspond to the identified one or more characteristics of the requested communications service, the selection of taken-up usage scheme is dependent on the respective applicability conditions meeting said characteristics associated with the requested communications service.

15. A method according to claim 14, including reviewing the identified applicability conditions during provision of the network service in an order determined by said prioritisation information.

16. A method according to claim 14 or claim 15, in which the applicability conditions include one or some of an amount of network resource, and/or temporal conditions associated with usage of network resource.

17. A method of controlling usage of network resources associated with communications services requested by a subscriber in a communications system, the communications system providing subscribers with access to a plurality of optional usage schemes and storing data identifying optional usage schemes to which individual subscribers have taken up access, at least one of said optional usage schemes specifying a relationship between units of a first network resource associated with delivering a telecommunications service and units of a second, different, network resource associated with delivering a telecommunications service, the method comprising:
(i) monitoring usage of the first network resource by the subscriber,
(ii) identifying one or more optional usage schemes to which the subscriber has taken up access;
(iii) selecting at least one of said taken-up usage schemes, the selected taken-up usage scheme corresponding to the monitored usage of the first network resource;
(iv) assigning units in respect of the second network resource according to said monitored usage in dependence on the selected usage scheme; and
(v) storing data indicative of the assigned units for use in allocating second network resources to the subscriber.

18. A method according to claim 17, in which said usage scheme includes usage criteria specifying temporal parameters associated with usage of the first resource.

19. A method according to claim 17 or claim 18, in which said usage scheme includes usage criteria specifying roaming parameters associated with usage of the first resource.

20. A method according to any one of claim 17 to claim 19, in which the method is performed in response to receipt of a request for services from the subscriber.

21. A method according to any one of claim 17 to claim 20, in which at least one other said optional usage scheme specifies a relationship between units of a first network resource associated with delivering a telecommunications service and units of a second network resource associated with delivering the same telecommunications service.

22. Apparatus for controlling usage of communications services requested by a subscriber in a communications network, wherein the communications network is arranged to provide subscribers with access to a plurality of optional usage schemes, the apparatus comprising:
a storage system arranged to store data identifying optional usage schemes to which individual subscribers have taken up access, and data identifying usage criteria for each of said plurality of optional usage schemes, said usage criteria defining characteristics of a communications service to which a respective usage scheme may be applied;
a processing system responsive to a request for a communications service so as to identify a taken-up usage scheme corresponding to a characteristic of the requested communications service and to identify temporal applicability conditions associated therewith,
wherein, in the event that two or more of said taken-up usage schemes correspond to the identified characteristic of the requested communications service the processing system is arranged to apply said two or more taken-up usage schemes in an order determined by the respective temporal applicability conditions.

23. Apparatus according to claim 22, wherein the storage system is arranged to store data identifying prioritisation information for use in selection between said optional usage schemes, the processing system being arranged to review the identified temporal applicability conditions during provision of the network service in an order determined by said prioritisation information.
